# EUROPEAN PATENT SPECIFICATION

(11) **EP 3 720 758 B1**
(45) Date of publication and mention of the grant of the patent: **25.01.2023**
(21) Application number: 18827253.8
(22) Date of filing: 06.12.2018
(51) Int. Cl.: B62D 7/18

(54) **WHEEL-CARRYING MEMBER FOR A VEHICLE SUSPENSION**
RADTRAGENDES ELEMENT FÜR EINE FAHRZEUGAUFHÄNGUNG
ÉLÉMENT DE SUPPORT DE ROUE POUR UNE SUSPENSION DE VÉHICULE

(30) Priority: 06.12.2017 IT 201700141159
(43) Date of publication of application: 14.10.2020
(73) Proprietor: Marelli Suspension Systems Italy S.p.A., 20011 Corbetta (MI) (IT)
(72) Inventor: SANTINI, Andrea, 10093 Collegno (Torino) (IT); SOTTILE, Salvatore, 98050 Terme Vigliatore (Messina) (IT); PULINA, Fabio, 10123 Torino (IT)
(74) Representative: Savoca, Agatino
(86) International application number: PCT/IB2018/059712
(87) International publication number: WO 2019/111200

(56) References cited:
- WO-A2-2014/195486
- DE-A1-102007 053 120
- DE-B3-102013 209 987
- KR-A- 20150 065 222
- US-A1- 2017 210 418

## Description

The present invention relates to a wheel-carrying member for a vehicle suspension, that can be used both for the front suspension and for the rear suspension of the vehicle.

As is known, the wheel-carrying member of a vehicle suspension serves for connecting the wheel, via a bearing and a hub, to the suspension linkage, that is, to the assembly of arms or levers of the suspension. The wheel-carrying member further provides the seats for the mountings of the brake caliper, for the sensors associated to the wheel (for example, the ABS sensor) and for the shock absorber. In a vehicle, the wheel-carrying members are provided both in the front and in the rear suspensions and have different geometrical features depending on the type of suspension (for example, McPherson, double wishbone, "multi-link").

Steel, aluminium and cast iron are the materials generally used for this component.

Wheel-carrying members for vehicle suspensions are also known, which members have a hybrid structure, with a body formed by a fibre-reinforced polymeric matrix and with a plurality of metal inserts that are rigidly connected to said polymeric matrix and are used to connect the wheel-carrying member with further components of the vehicle suspension.

A wheel-carrying member with such a hybrid structure is known, for example, from DE 10 2007 053120. This known solution comprises a body formed by a thermoset polymeric matrix and, therefore, the corresponding manufacturing cycle comprises, among others, a curing step, which involves an increase in the cycle time. In addition, the shape of the inserts and the way of fixing them to the body are such that the inserts can only work as load transfer elements, and not as load bearing elements, and, thus, do not substantially contribute to the overall strength and stiffness of the wheel-carrying member. KR 2015 0065222 discloses a wheel-carrying member for vehicle suspension comprising plate elements made of plastic material reinforced with carbon fiber, which are made separately from each other and subsequently firmly connected to each other by bonding.

It is an object of the present invention to provide a wheel-carrying member for a vehicle suspension, of the type having a hybrid structure , that is simpler, quicker and cheaper to manufacture and has a higher strength and stiffness than the prior art discussed above.

This and other objects are fully accomplished according to the invention by virtue of a wheel-carrying member having the features set forth in the attached independent claim 1.

Advantageous embodiments of the invention are defined in the dependent claims, the subject-matter of which is to be considered as forming an integral part of the following description.

A further aspect of the present invention relates to a method for manufacturing a wheel-carrying member for a vehicle suspension comprising the steps set forth in independent claim 11.

In short, the invention is based on the idea of providing a wheel-carrying member with a hybrid structure, comprising:
a body in a composite material with a fibre-reinforced thermoplastic matrix;
at least one shell element formed by a laminate with a thermoplastic matrix, said at least one shell element being fixed on an external side of the body, which is a side of the body that, in the mounted condition of the wheel-carrying member on the vehicle, is directed laterally outwards of the vehicle; and
a plurality of metal inserts for connecting the wheel-carrying member to other components of the suspension or of the vehicle, each metal insert being embedded in the body so as to be firmly connected to the body without the use of adhesive means.

By virtue of such a structure, the wheel-carrying member according to the invention is lighter than a conventional wheel-carrying member made of steel, aluminium or cast iron. Furthermore, by conveniently choosing the geometry of the body, as well as the geometry and the arrangement of the shell element (or of the shell elements), it is possible to provide a wheel-carrying member that fulfils the specific requirements in terms, for example, of mechanical strength, stiffness, etc. The use of a thermoplastic material for the polymeric matrix of the body allows speeding up the manufacturing cycle, since no curing step is required. In addition, the particular shape of the inserts and the way of fixing them to the body of the wheel-carrying member allow to use the inserts not only as load transfer elements but also, and more importantly, as load bearing elements that contribute to the overall strength and stiffness of the wheel-carrying member.

According to an embodiment of the invention, the body is shaped as a hollow body and has a cross section that is open towards the internal side.

Furthermore, the body is preferably provided with a plurality of stiffening ribs, which are made in a single piece with the body and are conveniently arranged and sized so as to increase the overall mechanical strength and stiffness of the body, and thus of the wheel-carrying member.

The at least one shell element formed by a thermoplastic matrix laminate is advantageously obtained by a thermoforming process. The geometry and the arrangement of such element(s), the features of each ply (woven or unidirectional fibres), the orientation of the carbon fibres and the type of reinforcement fibres (glass or carbon, long or short) will be selected based on the mechanical requirements for the wheel-carrying member. The type of thermoplastic resin will be selected based on the structural and environmental requirements for the wheel-carrying member.

The body is advantageously made by over-moulding of the composite material on the least one shell element. Again, the geometry of the body, the type of resin and the type of reinforcement fibres (glass or carbon, long or short) will be selected based on the mechanical requirements and on the operational environment of the wheel-carrying member.

The metal inserts are preferably made of aluminium or steel and preferably subjected to a surface pre-treatment (sandblasting, laser treatment, etc.) to increase adhesion with the composite material of the body. In addition, the inserts preferably have at least one undercut portion which is filled by the injected material of the body, so that the bonding of the joint between the inserts and the body is increased and the overall strength and stiffness characteristics of the wheel-carrying member are improved.

Further features and advantages of the present invention will become apparent from the following detailed description, given purely by way of non-limiting example with reference to the appended drawings, wherein:
Figure 1 is a perspective view of a wheel-carrying member according to an embodiment of the present invention, in the mounted condition on a motor vehicle, in particular for supporting a front wheel of the motor vehicle;
Figures 2 and 3 are perspective views from the external side and the internal side, respectively, of the wheel-carrying member of Figure 1;
Figure 4 is a perspective view of the shell element of the wheel-carrying member of Figure 1;
Figure 5 is a section view of a portion of the wheel-carrying member of Figure 1, arranged for connection with a steering arm of the motor vehicle;
Figure 6 is a perspective view of a metal insert of the wheel-carrying member of Figure 1, used for connecting an oscillating arm of the suspension to the wheel-carrying member;
Figure 7 is a perspective view of a portion of the wheel-carrying member of Figure 1, where the metal insert of Figure 6 is fixed;
Figures 8 and 9 are perspective views from the external side and the internal side, respectively, of a wheel-carrying member according to a further embodiment of the present invention;
Figure 10 is a section view of the wheel-carrying member of Figures 8 and 9, cut along section line X-X of Figure 9;
Figure 11 is a section view of the wheel-carrying member of Figures 8 and 9, cut along section line XI-XI of Figure 9;
Figure 12 is a section view of the wheel-carrying member of Figures 8 and 9, cut along section line XII-XII of Figure 9; and
Figure 13 is a section view of the wheel-carrying member of Figures 8 and 9, cut along section line XIII-XIII of Figure 9.

In the following description and claims, terms like "front" and "rear", "upper" and "lower", etc. are to be intended as referred to the mounted condition of the wheel-carrying member on a motor vehicle.

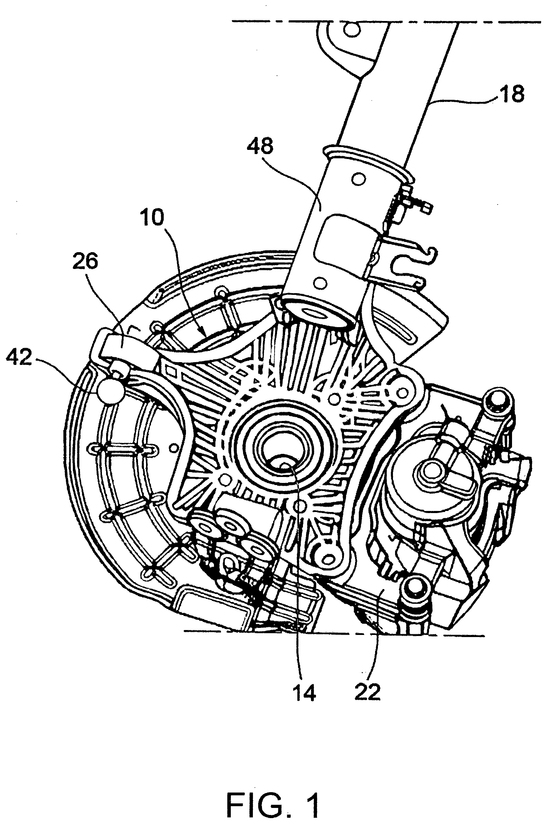

With reference first to Figure 1, a wheel-carrying member according to an embodiment of the present invention is generally indicated with 10 and is used herein for supporting a front wheel of a motor vehicle in a McPherson suspension system. The use of the wheel-carrying member for a McPherson front suspension is, nevertheless, to be intended purely as a non-limitative example, as the wheel-carrying member according to the present invention can be used in any other type of suspension, be it a front suspension or a rear one.

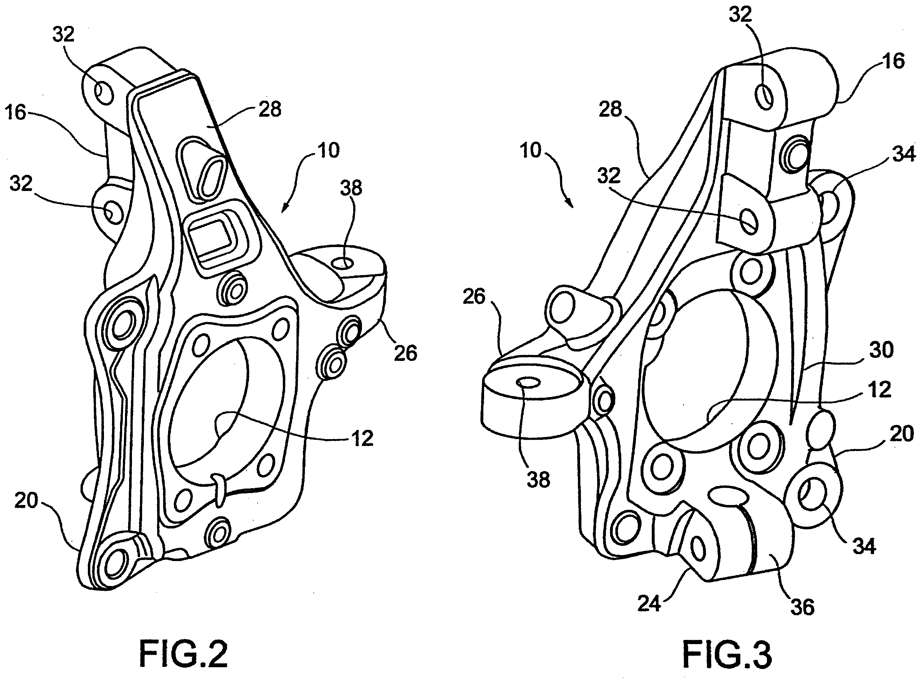

With reference also to Figures 2 and 3, the wheel-carrying member 10 has a seat 12 for the mounting of a bearing 14 for supporting the wheel. The wheel-carrying member 10 further comprises a mounting portion 16 for the mounting of a shock absorber 18, a mounting portion 20 for the mounting of a brake caliper 22, a mounting portion 24 for the mounting of an oscillating arm (not shown) and a mounting portion 26 for the mounting of a steering arm (not shown).

Of course, depending on the type of suspension the number and the arrangement of the mounting portions may change with respect to what is shown in the drawings. For example, in case of a rear suspension, where the wheel is usually a non-steering wheel, the wheel-carrying member 10 would not include the mounting portion 26. Furthermore, in case, for example, of a multi-link suspension, the wheel-carrying member 10 will include a plurality of mounting portions for the mounting of the plurality of rods/arms of the suspension.

According to the invention, the wheel-carrying member 10 has a hybrid structure comprising a shell element 28, a body 30 and a plurality of inserts (namely, a pair of inserts 32 for fixing the wheel-carrying member 10 to the shock absorber 18, a pair of inserts 34 for fixing the wheel-carrying member 10 to the brake caliper 22, an insert 36 for connecting the wheel-carrying member 10 to the oscillating arm and an insert 38 for connecting the wheel-carrying member 10 to the steering arm). The shell element 28 (which is, in this case, a single shell element) is formed by a laminate with a thermoplastic matrix and is fixed to an external side of the body 30. The body 30 is made of a composite material with a fibre-reinforced thermoplastic matrix and is shaped as a hollow body, with a cross section that is open towards the internal side (that is, towards the side that, in the mounted condition of the wheel-carrying member on a vehicle, faces towards the internal side of the vehicle). The inserts 32, 34, 36 and 38 are made of metal, for example aluminium or steel.

The outer shell element 28 is advantageously made by thermoforming process. The overall geometry of the shell element, the features of each ply (woven or unidirectional fibres), the orientation of the carbon fibres and the type of reinforcement fibres (glass or carbon, long or short) will be selected based on the mechanical requirements for the wheel-carrying member. The type of thermoplastic resin will be selected based on the structural and environmental requirements for the wheel-carrying member.

According to an embodiment, for example, the shell element 28 is made by stacking of pre-preg plies, reinforced with unidirectional carbon fibres, directed at 0/45/-45/90 degrees. The choice of the four directions indicated above allows for the highest degree of isotropy that can theoretically be obtained with a stacking of plies having unidirectional fibres. The shell element 28 is balanced in the direction 45 degrees, so that a coupling effect between bending and torsion, which would occur in case of lack of balance, is avoided.

Nevertheless, the shell element 28 may also be made, for example, by stacking of pre-preg plies with woven carbon fibres.

More generally, the shell element 28 will be formed by a sequence of carbon-fibre (and, possibly, glass-fibre too) pre-preg plies, conveniently configured to maximise the mechanical performances of the component and bear the stresses the component undergoes in use. Furthermore, the shell element 28 may have a variable thickness, with a greater thickness in the areas where higher stresses are applied, or, alternatively, a constant thickness with localized reinforcements in the areas where higher stresses are applied.

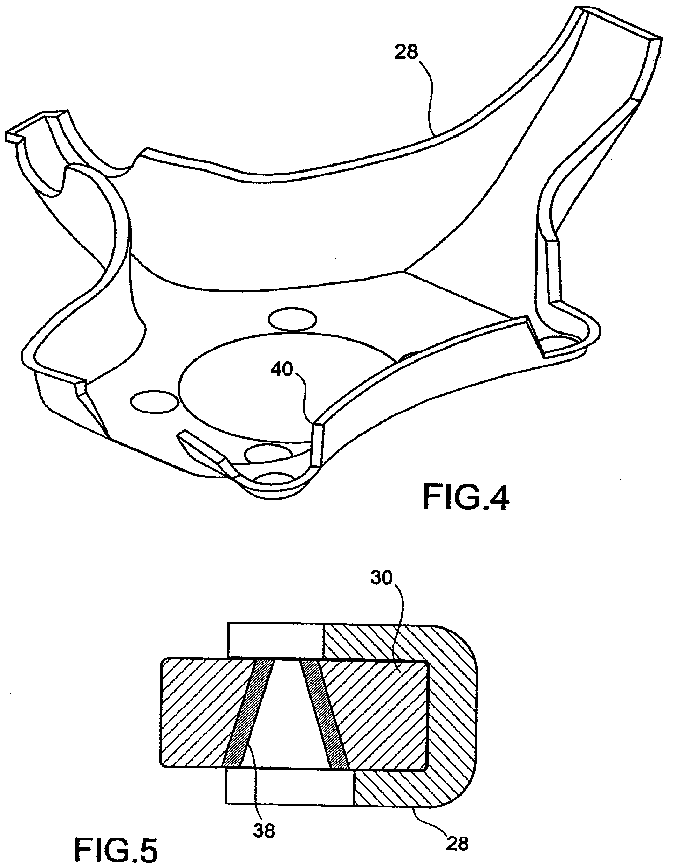

The shell element 28 may provide the wheel-carrying member 10 with a greater level of stiffness than the one provided by the body 30. The highest stiffness contribution by the shell element 28 is provided in the plane of the ply. However, by virtue of the particular geometry of the shell element 28 at the above-mentioned mounting portions, and more specifically by virtue of the presence of bent edges along some lengths of the perimeter of the shell element (see, for example, edge 40 in Figure 4), the shell element 28 provides a certain contribution to stiffness also outside the plane of the ply.

The body 30 is made of a composite material with a thermoplastic matrix, for example with a polyphthalamide (PPA) or polyamide (PA6, PA66) matrix having mechanical characteristics that are selected based on the performance requirements for the wheel-carrying member. Because of the reduced water absorption tendency of the polyphthalamide, this material is particularly indicated for a component that is exposed, though not directly, to weather, as is the case for a wheel-carrying member.

Preferably, the same material used for the thermoplastic matrix of the shell element 28 is also used for the thermoplastic matrix of the body 30, so that compatibility issues between the shell element and the body during moulding are avoided.

The reinforcement fibres of the composite material of the body 30 are, for example, glass fibres, in particular so-called "chopped" glass fibres.

The body 30 provides the wheel-carrying member 10 with a further amount of stiffness, in addition to the one provided by the shell element 28. In particular, the body 30 provides a contribution to the stiffness outside the plane of the ply.

The body 30 may be made by over-moulding of the composite material (for example polyphthalamide loaded with glass or carbon, long or short fibres) on the shell element 28 or in a same forming operation (the so-called "one shot" technique) or in a subsequent operation once the ply forming the shell element 28 has been obtained.

The body 30 preferably has a plurality of ribs with a geometry and a thickness that are conveniently defined depending on the stress state to which the wheel-carrying member is subject in use. The ribs are made in a single piece with the body 30 and are configured to adhere to the shell element 28 and to the bent edges 40 thereof, if any.

The inserts 32, 34, 36 and 38 are firmly secured to the body 30, preferably by insert moulding. In order to improve adhesion with the composite material of the body 30, the inserts 32, 34, 36 and 38 may undergo surface pre-treatments (sandblasting, laser treatment, etc.) according to processes that are already well known and therefore will not be described in detail herein. In addition, the inserts may be conveniently shaped to have undercut portions which are filled by the material of the body 30, in order to improve the bonding of the joint between the inserts and the body.

With reference to Figure 5, the insert 38 for connection of the wheel-carrying member 10 to the steering arm is made, for example, as a conical insert, where the conical pin of a head 42 (shown in Figure 1) is intended to be inserted and secured with a nut, the head 42 being coupled to the steering arm by a ball joint. The use of a conical insert, where the conical pin of the head is accommodated and locked, allows to distribute the steering loads, projecting the exchanged force not only on a radial direction, but also on an axial one.

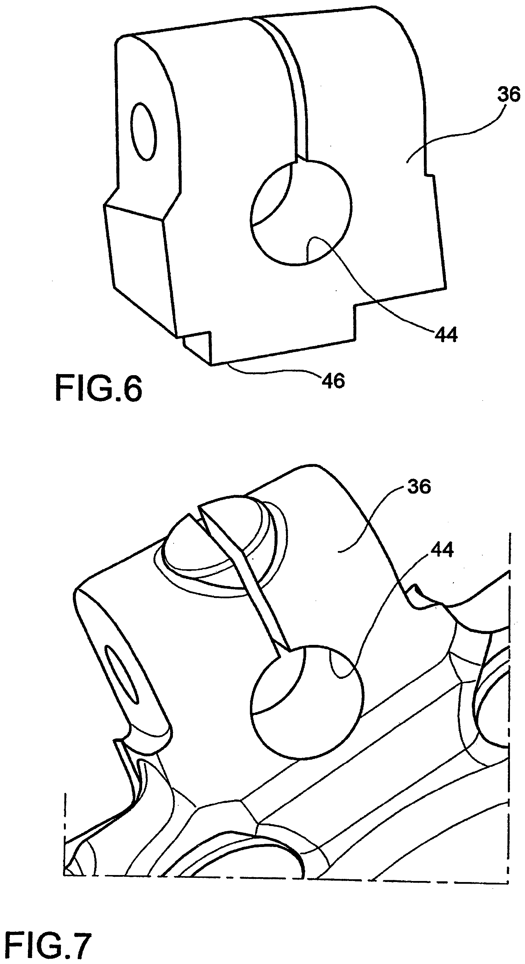

Figures 6 and 7 show in detail the insert 36 used for connection of the wheel-carrying member 10 to the oscillating arm. The insert 36 has a seat 44 for accommodating a cylindrical pin head (not shown) that is rigidly connected, for example by press-fitting, threaded connection or riveting, to the oscillating arm.

Preferably, the insert 36 forms a protrusion 46 and at least one undercut portion for increasing the contact surface between the metallic material of the insert 36 and the composite material of the body 30 and improving the bonding between the insert and the body (by virtue of the injected material of the body flowing into the undercut portion(s)).

With reference to Figures 1 to 3, the connection of the wheel-carrying member 10 with the shock absorber 18 is obtained by screwing to the wheel-carrying member, in the region of the inserts 32, a bracket 48 which is rigidly connected, for example by welding, to the body of the shock absorber.

The inserts 32, 34 and 38 are preferably accommodated in respective sleeves of composite material which are integrally formed by the body 30 and at which the ribs of the body 30 end.

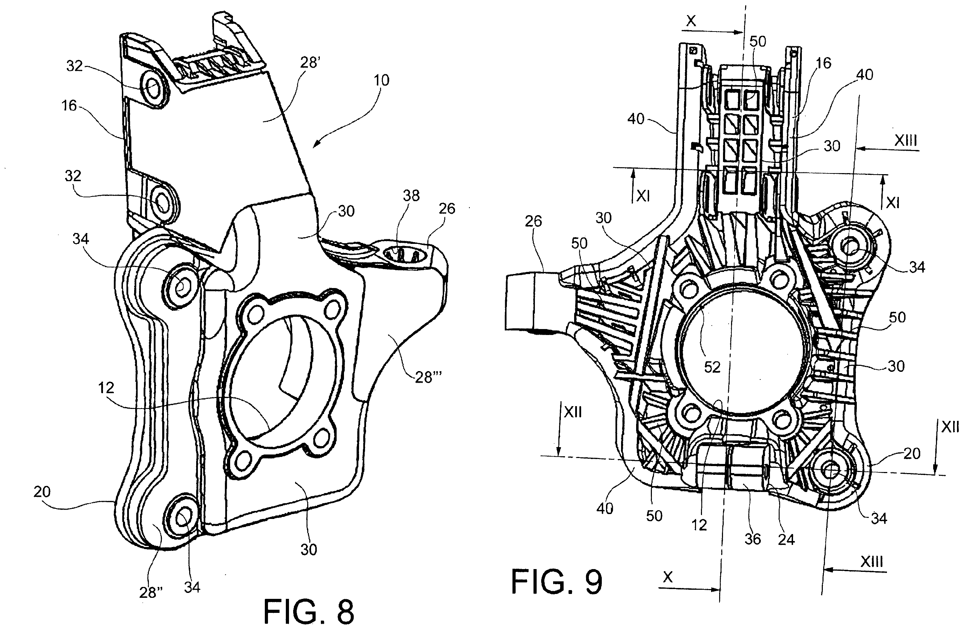

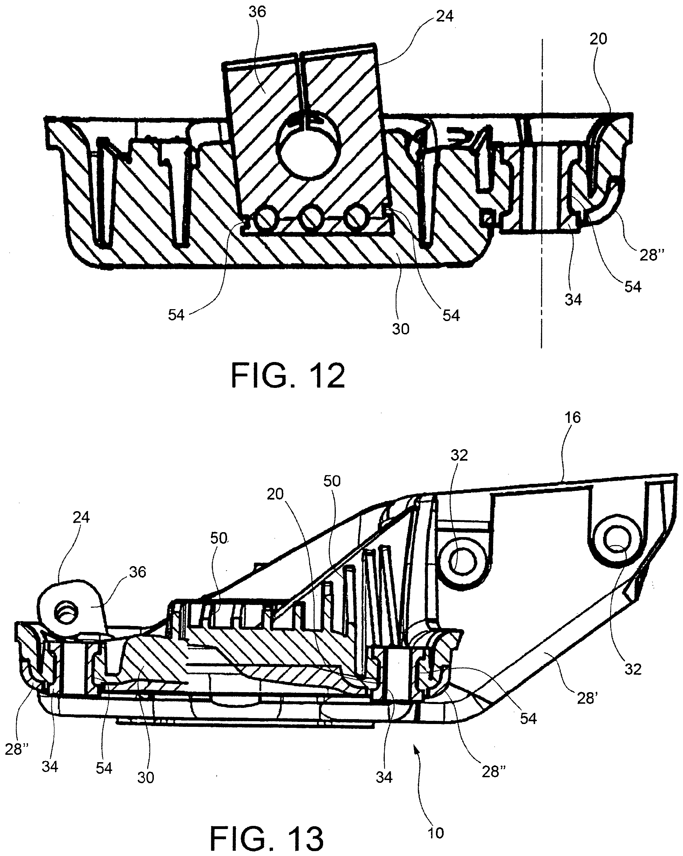

A further embodiment of a wheel-carrying member according to the present invention is shown in Figures 8 to 13, where parts and elements identical or corresponding to the ones shown in Figures 1 to 7 are indicated with the same reference numbers.

According to this further embodiment, the wheel-carrying member 10 comprises a body 30 and a number of shell elements 28, which are separate from one another (in the present case, three shell elements indicated with 28', 28" and 28‴, respectively) and fixed to the body 30 on the external side thereof, that is, on the side facing outwards of the vehicle in the mounted condition of the wheel-carrying member 10 on the vehicle.

In the example shown in Figures 8 to 13, the shell elements 28', 28" and 28'" are positioned in the mounting portion 16 for the shock absorber, in the mounting portion 20 for the brake caliper, and in the mounting portion 26 for the steering arm, respectively. Of course, the number and the position of the shell elements may change depending on the specific requirements.

In addition, in this embodiment the body 30 is made as a hollow body having across section that opens towards the internal side. In this case, therefore, the bent edges 40 described above with reference to the embodiment of Figures 1 to 7 are formed by the body 30, rather than by the shell element (or by one of the shell elements).

In order to make the structure of the wheel-carrying member more rigid, the body 30 has a ribbed structure with a plurality of ribs 50 (that can be seen in particular in Figure 9) formed in a single piece with the body itself.

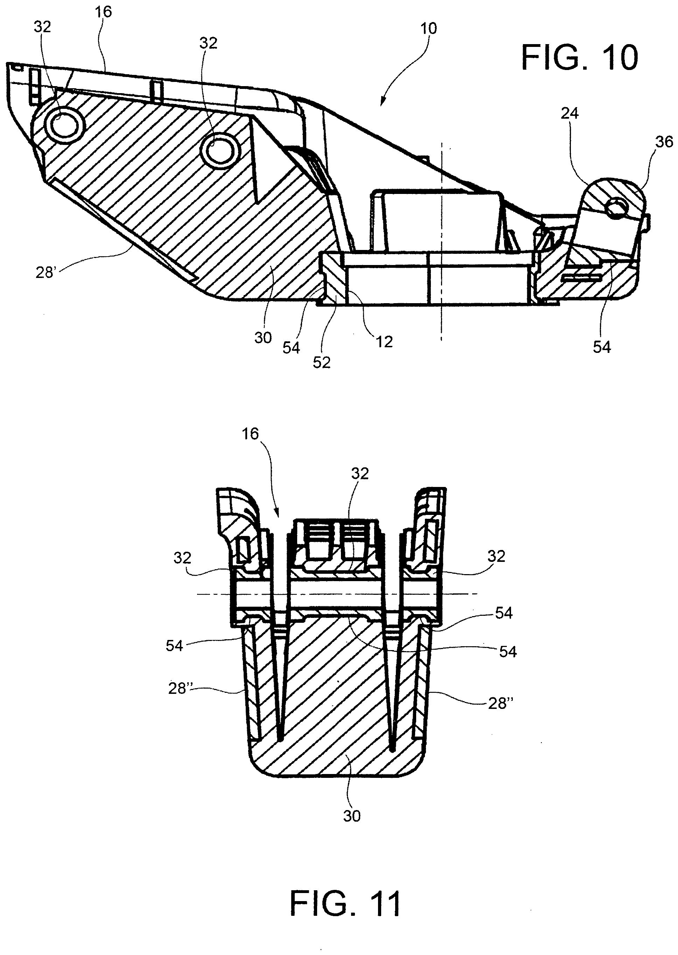

With reference to Figures 10 to 12, the metal inserts (in Figures 10 to 12 only the metal inserts 32, 34 and 36, along with a further metal insert 52 - shown in section in Figure 10 - that defines the seat 12 for the mounting of the wheel bearing, are shown in section) have each at least one undercut portion 54 filled by the injected material of the body 30, which allows to improve the bonding between the inserts and the body and increase the overall strength and stiffness characteristics of the wheel-carrying member.

As regards the materials used for the body and the shell elements, as well as the manufacturing process of the wheel-carrying member, what has been explained above with reference to the embodiment of Figures 1 to 7 still applies.

By virtue of the body and the shell element of the wheel-carrying member being made of a composite material and metallic material being only used for the inserts, the wheel-carrying member according to the present invention has a remarkably lower weight than a conventional wheel-carrying member entirely made of metal (such as steel, aluminium or cast iron), without thereby adversely affecting the performances of the wheel-carrying member. By means of a convenient design of the geometry and of the structure of the body and of the shell element it is, in fact, possible to provide a wheel-carrying member that is able to fulfil the requirements of the specific application for which the wheel-carrying member is designed.

Naturally, the principle of the invention remaining unchanged, the embodiments and constructional details may vary widely from those described and illustrated purely by way of non-limiting example, without thereby departing from the scope of the invention as defined in the appended claims.

In particular, as explained above, the overall geometry of the wheel-carrying member, the number, the arrangement and the configuration of the inserts, as well as the geometry and the internal structure of the shell element (or elements) and of the body, may change depending on the particular application for which the wheel-carrying member is designed.

## Claims

1. Wheel-carrying member (10) for a vehicle suspension, with a hybrid structure comprising a body (30) in a composite material with a fibre-reinforced thermoplastic matrix , at least one shell element (28, 28', 28", 28"') formed by a laminate with a thermoplastic matrix and fixed on an external side of the body (30), which is a side of the body (30) that, in the mounted condition of the wheel-carrying member (10) on the vehicle, is directed laterally outwards of the vehicle,
and a plurality of metal inserts (32, 34, 36, 38, 52) for connecting or fixing the wheel-carrying member (10) to other components (18, 22) of the suspension or of the vehicle, said metal inserts (32, 34, 36, 38, 52) being at least partially embedded in the body (30) so that they are firmly connected to the body (30) without the use of adhesive means.

2. Wheel-carrying member according to claim 1, wherein the thermoplastic matrix of said at least one shell element (28, 28', 28", 28‴) and/or the thermoplastic matrix of the body (30) are made of polyphthalamide or polyamide.

3. Wheel-carrying member according to claim 1 or claim 2, wherein the thermoplastic matrix of the internal body (30) is made of the same material as that of the thermoplastic matrix of said at least one shell element (28, 28', 28", 28‴).

4. Wheel-carrying member according to any one of the preceding claims, wherein said metal inserts (32, 34, 36, 38, 52) include each at least one undercut portion (54) filled with the material of the body (30).

5. Wheel-carrying member according to any one of the preceding claims, comprising a single shell element (28) that has bent edges (40) along at least one length of its perimeter.

6. Wheel-carrying member according to any one of claims 1 to 4, wherein the body (30) is made as a hollow body having a cross section open towards the internal side.

7. Wheel-carrying member according to claim 6, wherein the body (30) forms, along its perimeter, a plurality of bent edges (40).

8. Wheel-carrying member according to any one of the preceding claims, wherein said plurality of metal inserts (32, 34, 36, 38, 52) comprises an insert (32) for fixing the wheel-carrying member (10) to a shock absorber (18) of the suspension, an insert (34) for fixing the wheel-carrying member (10) to a brake caliper (22), an insert (36) for connecting the wheel-carrying member (10) to an oscillating arm or other arm/rod of the suspension, an insert (52) that defines a seat (12) for the mounting of a wheel bearing (14) and/or an insert (38) for connecting the wheel-carrying member (10) to a steering arm.

9. Wheel-carrying member according to any one of the preceding claims, wherein the body (30) has a ribbed structure.

10. Vehicle suspension comprising a wheel-carrying member (10) according to any one of the preceding claims.

11. Method for manufacturing a wheel-carrying member (10) for a vehicle suspension according to any one of claims from 1 to 9, comprising the steps of:
a) providing said at least one shell element (28, 28', 28", 28"') by thermoforming;
b) providing the body (30) by over-moulding of composite material on said at least one shell element (28, 28', 28", 28‴); and
c) securing the metal inserts (32, 34, 36, 38, 54) to the body (30) by insert moulding.

12. Method according to claim 11, wherein said steps a), b) and c) are performed in a same forming process or said steps b) and c) are performed after said step a).

## Patentansprüche

1. Radtragendes Element (10) für eine Fahrzeugaufhängung, mit einer Hybridstruktur, die einen Körper (30) aus einem Verbundwerkstoff mit einer faserverstärkten thermoplastischen Matrix, mindestens ein Schalenelement (28, 28', 28", 28‴), das aus einem Laminat mit einer thermoplastischen Matrix gebildet und an einer Außenseite des Körpers (30) befestigt ist, die eine Seite des Körpers (30) ist, die im montierten Zustand des radtragenden Elements (10) an dem Fahrzeug seitlich nach außen gerichtet ist,
und eine Vielzahl von Metalleinsätzen (32, 34, 36, 38, 52) zum Verbinden oder Befestigen des radtragenden Elements (10) mit anderen Komponenten (18, 22) der Aufhängung oder des Fahrzeugs umfasst, wobei die Metalleinsätze (32, 34, 36, 38, 52) zumindest teilweise in den Körper (30) eingebettet sind, so dass sie ohne die Verwendung von Klebemitteln fest mit dem Körper (30) verbunden sind.

2. Radtragendes Element nach Anspruch 1, wobei die thermoplastische Matrix des mindestens einen Schalenelements (28, 28', 28", 28‴) und/oder die thermoplastische Matrix des Körpers (30) aus Polyphthalamid oder Polyamid hergestellt ist.

3. Radtragendes Element nach Anspruch 1 oder Anspruch 2, wobei die thermoplastische Matrix des inneren Körpers (30) aus dem gleichen Material wie die thermoplastische Matrix des mindestens einen Schalenelements (28, 28', 28", 28‴) besteht.

4. Radtragendes Element nach einem der vorhergehenden Ansprüche, wobei die Metalleinsätze (32, 34, 36, 38, 52) jeweils mindestens einen hinterschnittenen Abschnitt (54) aufweisen, der mit dem Material des Körpers (30) gefüllt ist.

5. Radtragendes Element nach einem der vorhergehenden Ansprüche, umfassend ein einziges Schalenelement (28), das entlang mindestens einer Länge seines Umfangs gebogene Kanten (40) aufweist.

6. Radtragendes Element nach einem der Ansprüche 1 bis 4, wobei der Körper (30) als Hohlkörper mit einem zur Innenseite hin offenen Querschnitt ausgebildet ist.

7. Radtragendes Element nach Anspruch 6, wobei der Körper (30) entlang seines Umfangs eine Vielzahl von gebogenen Kanten (40) bildet.

8. Radtragendes Element nach einem der vorhergehenden Ansprüche, wobei die Vielzahl von Metalleinsätzen (32, 34, 36, 38, 52) einen Einsatz (32) zur Befestigung des radtragenden Elements (10) an einem Stoßdämpfer (18) der Aufhängung, einen Einsatz (34) zur Befestigung des radtragenden Elements (10) an einem Bremssattel (22), einen Einsatz (36) zur Verbindung des radtragenden Elements (10) mit einem Schwingarm oder einem anderen Arm/Stab der Aufhängung, einen Einsatz (52), der einen Sitz (12) für die Montage eines Radlagers (14) definiert, und/oder einen Einsatz (38) zur Verbindung des radtragenden Elements (10) mit einem Lenkarm umfassen.

9. Radtragendes Element nach einem der vorhergehenden Ansprüche, wobei der Körper (30) eine gerippte Struktur aufweist.

10. Fahrzeugaufhängung mit einem radtragenden Element (10) nach einem der vorangehenden Ansprüche.

11. Verfahren zur Herstellung eines radtragenden Elements (10) für eine Fahrzeugaufhängung nach einem der Ansprüche 1 bis 9, das die folgenden Schritte umfasst:
a) Bereitstellen des mindestens einen Schalenelements (28, 28', 28", 28‴) durch Thermoformen;
b) Bereitstellen des Körpers (30) durch Überspritzen des mindestens einen Schalenelements (28, 28', 28", 28"") mit Verbundmaterial; und
c) Befestigen der Metalleinsätze (32, 34, 36, 38, 54) an dem Körper (30) durch Umspritzen.

12. Verfahren nach Anspruch 11, wobei die Schritte a), b) und c) in demselben Formgebungsverfahren durchgeführt werden oder die Schritte b) und c) nach dem Schritt a) durchgeführt werden.

## Revendications

1. Elément de support de roue (10) pour une suspension de véhicule, avec une structure hybride comprenant un corps (30) dans un matériau composite avec une matrice thermoplastique renforcée par des fibres, au moins un élément de coque (28, 28', 28", 28‴) formé par un stratifié avec une matrice thermoplastique et fixé sur un côté externe du corps (30), qui est un côté du corps (30) qui, dans l'état monté de l'élément de support de roue (10) sur le véhicule, est dirigé latéralement à l'extérieur du véhicule, et une pluralité d'inserts métalliques (32, 34, 36, 38, 52) pour relier ou fixer l'élément de support de roue (10) à d'autres composants (18, 22) de la suspension ou du véhicule, lesdits inserts métalliques (32, 34, 36, 38, 52) étant au moins en partie intégrés dans le corps (30) de sorte qu'ils sont fermement reliés au corps (30) sans l'aide de moyens adhésifs.

2. Elément de support de roue selon la revendication 1, dans lequel la matrice thermoplastique dudit au moins un élément de coque (28, 28', 28", 28‴) et/ou la matrice thermoplastique du corps (30) sont composés de polyphtalamide ou polyamide.

3. Elément de support de roue selon la revendication 1 ou revendication 2, dans lequel la matrice thermoplastique du corps interne (30) est composée du même matériau que celui de la matrice thermoplastique dudit au moins un élément de coque (28, 28', 28", 28‴).

4. Elément de support de roue selon l'une quelconque des revendications précédentes, dans lequel lesdits inserts métalliques (32, 34, 36, 38, 52) comportent chacun au moins une partie entaillée (54) remplie du matériau du corps (30).

5. Elément de support de roue selon l'une quelconque des revendications précédentes, comprenant un seul élément de coque (28) qui présente des bords courbes (40) le long d'au moins une longueur de son périmètre.

6. Elément de support de roue selon l'une quelconque des revendications 1 à 4, dans lequel le corps (30) est fabriqué comme un corps creux présentant une section transversale ouverte en direction du côté interne.

7. Elément de support de roue selon la revendication 6, dans lequel le corps (30) forme, le long de son périmètre, une pluralité de bords courbes (40).

8. Elément de support de roue selon l'une quelconque des revendications précédentes, dans lequel ladite pluralité d'inserts métalliques (32, 34, 36, 38, 52) comprend un insert (32) pour fixer l'élément de support de roue (10) à un amortisseur (18) de la suspension, un insert (34) pour fixer l'élément de support de roue (10) à un étrier de frein (22), un insert (36) pour relier l'élément de support de roue (10) à un bras oscillant ou à un(e) autre bras/tige de la suspension, un insert (52) qui définit un siège (12) pour le montage d'un roulement de roue (14) et/ou un insert (38) pour relier l'élément de support de roue (10) à un bras de direction.

9. Elément de support de roue selon l'une quelconque des revendications précédentes, dans lequel le corps (30) présente une structure nervurée.

10. Suspension de véhicule comprenant un élément de support de roue (10) selon l'une quelconque des revendications précédentes.

11. Procédé pour fabriquer un élément de support de roue (10) pour une suspension de véhicule selon l'une quelconque des revendications 1 à 9, comprenant les étapes de :
a) fourniture dudit au moins un élément de coque (28, 28', 28", 28‴) par thermoformage ;
b) fourniture du corps (30) par surmoulage de matériau composite sur ledit au moins un élément de coque (28, 28', 28", 28‴) ; et
c) fixation des inserts métalliques (32, 34, 36, 38, 54) au corps (30) par moulage par insertion.

12. Procédé selon la revendication 11, dans lequel lesdites étapes a), b) et c) sont mises en oeuvre dans un même processus de formation ou lesdites étapes b) et c) sont mises en oeuvre après ladite étape a).
